(19) **Europäisches Patentamt**

**European Patent Office**

**Office européen des brevets**

(11) **EP 0 984 561 A2**

(12) **EUROPEAN PATENT APPLICATION**

(43) Date of publication:
08.03.2000 Bulletin 2000/10

(51) Int. Cl.⁷: **H04B 1/707**

(21) Application number: **99117209.9**

(22) Date of filing: **01.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.09.1998 JP 24857498**

(71) Applicant: **NEC CORPORATION**
**Tokyo (JP)**

(72) Inventor: **Hayata, Toshihiro**
**Tokyo (JP)**

(74) Representative:
**Glawe, Delfs, Moll & Partner**
**Patentanwälte**
**Postfach 26 01 62**
**80058 München (DE)**

(54) **CDMA Rake receiver detecting timing relation between fingers**

(57) In a CDMA receiver operable in response to CDMA signals received through a plurality of paths to produce a reception signal, a path monitoring section detects whether or not selected and related paths among the plurality of the paths are identical with each other. When the selected and related paths are identical with each other, either one of the selected and the related paths for the CDMA signals alone is kept unchanged while another one of the selected and the related paths is released for reception of the other CDMA signals than the CDMA signals. In order to determine the identical path, detection is made about whether or not reception timing between the selected and the related paths has a close relation for a predetermined duration. In other words, the selected and the related paths are kept unchanged for the predetermined duration even when they are identical with each other.

FIG.1

Printed by Xerox (UK) Business Services
2.16.7/3.6

EP 0 984 561 A2

**Description**

Background of the Invention:

This invention relates to a CDMA (Code Division Multiple Access) signal receiver (will be simply often called a CDMA receiver hereinafter) and, in particular, to a CDMA receiver which includes a plurality of finger receivers.

As a mobile radio communication system which includes a transmitter side and a receiver side, a recent attention tends to be focused on a spread spectrum communication method which is strong against an interference and a violation. In the mobile radio communication system of such a spread spectrum communication type, transmission is made from the transmitter side by modulating a digital data sequence of an audio and/or an image into a modulated data signal by using a digital modulation method, such as PSK, FSK, and by spreading the modulated data signal into a spread base-band signal of a wide band by the use of a spread code, such as a PN (Pseudo random Noise) code. Thereafter, the spread base-band signal is finally converted into a radio frequency signal on the transmitter side. Briefly, the transmitter side generates the radio frequency signal, using a code division multiple access (CDMA) technique and may therefore be called a CDMA transmitter.

On the other hand, the receiver side reproduces the radio frequency signal into a reception data signal by despreading or inversely spreading the base-band signal by the use of the same spread code as that used on the transmitter side into a despread data signal, and by demodulating the despread data signal by the use of a digital demodulating method, such as PSK, FSK demodulating methods. At any rate, the receiver side reproduces the reception data signal by the use of the CDMA technique and may be referred to as a CDMA receiver.

In this event, the CDMA receiver has usually adopted a rake receiving technique for synthesizing a plurality of radio waves which are received as received data signal through a plurality of radio paths (will be often collectively called a multi-path). Specifically, the same received data signal is transmitted as the radio frequency signals or radio waves to the CDMA receiver through the plurality of the radio paths which are different from one another. The radio waves are subjected by the CDMA receiver to a vector synthesis to derive the reception data signal.

To this end, the CDMA receiver has a rake receiving section which includes a plurality of finger receiver units and a rake synthesizer. In this case, the finger receivers are given the received data signals separated from the radio waves at every spread code, namely, at every chip. The finger receivers individually despread the separated received data signals into demodulated signals and carry out symbol synthesis of the demodulated signals to produce the reception data signal. With this CDMA receiver, a time diversity operation is executed by using the rake receiving technique and is effective to remarkably improve a quality of the reception data signal even when noise is caused to occur over the plurality of the radio paths.

Herein, it often happens that a plurality of radio paths are very close to one another by chance and, as a result, reception timing for each path becomes very close to one another, in spite of the fact that they are to be actually separated or different from one another.

In this event, a single one of the finger receivers alone is allocated to a single one of the radio paths in the CDMA receiver even when there are a plurality of radio paths which are very close to each other and which are actually different from one another. This shows that one of the finger receivers alone is operated on reception of the radio waves which are to be actually assigned to different finger receivers. Therefore, the radio paths which can be captured by the finger receivers are decreased in number, which results in a degradation of a reception characteristic concerned with the rake receiving.

Summary of the Invention:

It is an object of this invention to provide a CDMA receiver which is capable of improving a reception characteristic on carrying out rake receiving.

It is another object of this invention to provide a CDMA receiver of the type described, which can distinguish radio waves from one another even when the radio waves are received through radio paths which are very close to each other.

It is still another object of this invention to provide a CDMA receiver of the type described, which can effectively assign finger receivers to the radio waves received through the very close radio paths.

According to an aspect of this invention, a CDMA receiver is operable in response to CDMA signals received through a plurality of paths to produce a reception signal. The CDMA receiver comprises a path monitoring section for monitoring the plurality of the paths to detect whether or not first and second paths among the plurality of the paths in connection with the CDMA signals are identical with each other and a processing section for processing the first and the second paths when the first and the second paths are identical with each other, to keep both the first and the second paths unchanged for a predetermined duration and to thereafter release either one of the first and the second paths for reception of the other CDMA signals. In this event, the path monitoring section monitors a pilot signal included in the CDMA signals while the first and the second paths are a selected path and a related path concerned with the selected path.

According to another aspect of this invention, a CDMA receiver comprises a plurality of demodulating circuits which are supplied with the CDMA signals to demodulate the CDMA signals into demodulated signals, respectively, and a rake portion for gathering the demodulated signals into the reception signal. Each of the demodulating circuits comprises a fading vector generator for generating, from each of the CDMA signals, a fading vector which has an amplitude and a phase. The CDMA receiver comprises a path monitoring section for monitoring the plurality of the paths with reference to the fading vectors to detect whether first and second paths which are selected from among the plurality of the paths in connection with the CDMA signals are identical with each other or different from each other.

The path monitoring section comprises a calculating portion for calculating an amplitude ratio and a phase difference between the fading vectors concerned with the first and the second paths, a comparator for comparing the amplitude ratio and the phase difference with first and second thresholds, respectively, a judging portion for judging the first and the second paths are identical with each other when both the amplitude ratio and the phase difference are smaller than the first and the second thresholds, respectively. The judging portion judges the first and the second paths are different from each other when either the amplitude ratio or the phase difference is not greater than the first threshold or the second threshold.

In addition, the path monitoring section may monitor, together with the fading vectors, the plurality of the paths by using reception timing of each CDMA signal received through the first and the second paths.

The path monitoring section comprises a timing comparator for comparing first reception timing for the first path with second reception timing for the second path to detect a timing relation between the first reception timing and the second reception timing and a close detection portion for detecting whether or not the first reception timing is close to the second reception timing, to judge that the first and the second paths are identical with each other when the timing relation is close such that the first reception timing is close to the second reception timing. The close detection portion comprises a time monitoring portion for monitoring whether or not the close relation lasts for a predetermined duration between the first reception timing and the second reception timing and a judging portion for judging the first and the second paths as the identical path when the close relation lasts for the predetermined duration, and, otherwise, for judging the first and the second paths as different paths.

According to still another aspect of this invention, a CDMA receiver comprises a plurality of demodulating circuits which are supplied with the CDMA signals to demodulate the CDMA signals into demodulated signals, respectively, and a rake portion for gathering the demodulated signals into the reception signal. Each of the demodulating circuits comprises a fading vector generator for generating, from each of the CDMA signals, a fading vector which has an amplitude and a phase. Under the circumstances, the CDMA receiver comprises means for detecting a close relation between selected reception timing for a selected one of the CDMA signals received by one of the demodulating circuits and related reception timing for the other one of the CDMA signals received by the other one of the demodulating circuits, means) which is supplied with a first fading vector produced from the one of the CDMA signals by the one of the demodulating circuits and a second fading vector produced from the other one of the CDMA signals by the other one of the demodulating circuits, for comparing an amplitude ratio and a phase difference between the first and the second fading vectors, means for changing either the selected reception timing and the related reception timing when both the amplitude ratio and the phase difference are smaller than first and second thresholds, respectively, and means for receiving the one and the other one of the CDMA signals at the selected and the related reception timing, respectively, when either the amplitude ratio or the phase difference is greater than the first and the second thresholds, respectively.

According to yet another aspect of this invention, a CDMA receiver comprises means for detecting a close relation such that selected reception timing assigned to one of the demodulating circuits to receive the CDMA signals at the selected reception timing is close to the other reception timing assigned to the other one of the demodulating circuits to receive the CDMA signals at the other reception timing, means for allocating the one and the other demodulating circuits to the selected reception timing and the other reception timing for a predetermined duration, and means for changing either one of the selected reception timing and the other reception timing to another reception timing when the close relation lasts after lapse of the predetermined duration.

According to another aspect of this invention, a CDMA receiver comprises means for detecting a close relation such that selected reception timing assigned to one of the demodulating circuits to receive the CDMA signals at the selected reception timing is close to the other reception timing assigned to the other one of the demodulating circuits to receive the CDMA signals at the other reception timing, means, which is supplied with a first fading vector produced from the one of the CDMA signals by the one of the demodulating circuits and a second fading vector produced from the other one of the CDMA signals by the other one of the demodulating circuits, for comparing an amplitude ratio and a phase difference between the first and the second fading vectors, means for allocating the one and the other demodulating circuits to the selected reception timing and the other reception timing for a predetermined duration when either the amplitude ratio or the phase difference is greater than first or second threshold, and

means for changing either one of the selected reception timing and the other reception timing to another reception timing when the close relation lasts after lapse of the predetermined duration.

According to another aspect of this invention, a CDMA receiver comprises a plurality of finger circuits which are supplied with the CDMA signals to demodulate the CDMA signals into demodulated signals, respectively, and a rake portion for gathering the demodulated signals into the reception signal. The CDMA receiver comprises a delay profile generator for generating a delay profile by using the CDMA signals received, a finger candidate selector for selecting, from the delay profile, a predetermined number of finger timing candidates which correspond to finger circuit candidates, a relation detector for making the finger timing candidates relate to related reception timing which is assigned to each of the finger circuits currently used and which is close to each of the finger timing candidates, a timing comparator for comparing the related reception timing and each of the finger timing candidates to detect a related one of the finger circuits that is related to each of the finger timing candidates and which is being currently used, a close timing protection portion for detecting whether or not each of the finger timing candidates is close to the related reception timing to produce a relation signal representative of a relation between each of the finger timing candidates and the related reception timing, and a finger allocation portion for allocating the reception timing to the finger circuits in accordance with the relation signal.

Brief Description of the Drawing:

Fig. 1 shows a block diagram of a CDMA receiver according to a first embodiment of this invention;
Fig. 2 shows a delay profile which is representative of a relationship between reception timing and a correlation value;
Figs. 3A and 3B exemplify fading vectors which are smaller and not smaller than thresholds, respectively;
Fig. 4 shows a block diagram of a close timing protection portion illustrated in Fig. 1;
Fig. 5 shows a flow chart for use in describing operation of a part of the CDMA receiver illustrated in Fig. 1;
Fig. 6 shows a flow chart for use in describing operation of another part of the CDMA receiver illustrated in Fig. 1;
Fig. 7 shows a block diagram of a close timing protection portion used in a CDMA receiver according to a second embodiment of this invention;
Fig. 8 shows a flow chart for use in describing operation of the close timing protection portion illustrated in Fig. 7;

Fig. 9 shows a block diagram of a CDMA receiver according to a third embodiment of this invention;
Fig. 10 shows a block diagram of a close timing protection portion illustrated in Fig. 9; and
Fig. 11 shows a flow chart for use in describing operation of the close timing protection portion illustrated in Fig. 9.

Description of the Preferred Embodiments:

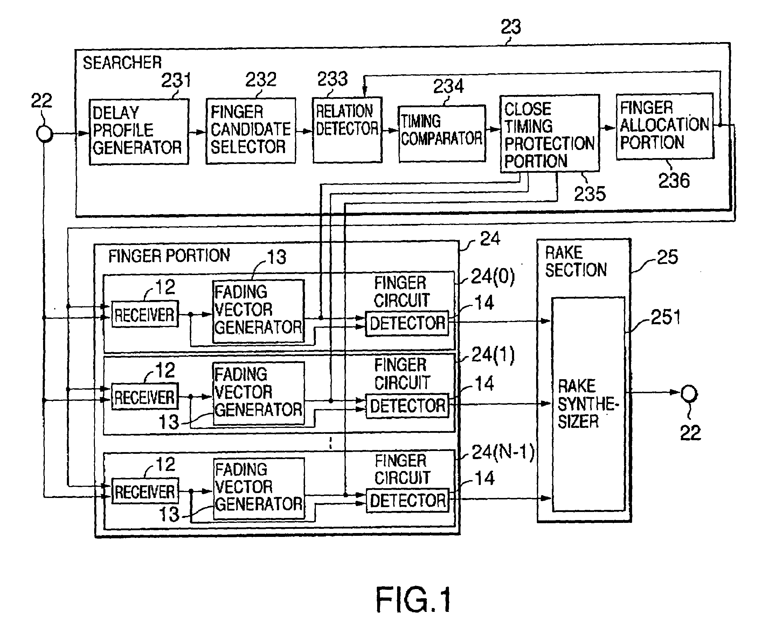

Referring to Fig. 1, a CDMA receiver according to a first embodiment of this invention has an input terminal 21, an output terminal 22, a searcher 23, a finger section 24, and a rake section 25. The searcher 23 is operable as a path monitoring section and a processing section, as will become clear as the description proceeds.

The input terminal 21 is given CDMA signals through an antenna (not shown) from a CDMA transmitter (not shown also). It is assumed that the CDMA signals are sent to the CDMA receiver through a plurality of radio paths different from one another and, therefore, includes a plurality of path signals received through the different radio paths. In this connection, the CDMA signal will be called a multi-path signal.

The searcher 23 is operable in response to a specific signal, for example, a pilot signal included in the CDMA signal to search for paths which are assigned to the CDMA receiver and which are specified by reception timing of the CDMA signal. To this end, the searcher 23 calculates a correlation between the CDMA signal and a replica signal of a spread code predetermined for the CDMA receiver to determine the reception timing which is determined in relation to a plurality of the radio paths and which is shifted to one another. Therefore, the reception timing for each radio path or path is somewhat different from one another.

The finger section 24 is supplied through the input terminal 21 with the CDMA signals and is controlled by the searcher 23. The finger section 24 has a plurality of finger circuits which are operable in response to the reception timing for each radio path to despread and demodulate the CDMA signals into a plurality of demodulated signals or received signals, as will be described later in detail. The demodulated signals are gathered or raked by the rake section 25 to produce a synthesized signal through the output terminal 22. To this end, the rake section 25 sums up the demodulated signals by adding weights to each of the demodulated signals.

More specifically, the illustrated searcher 23 has a delay profile generator 231, a finger candidate selector 232, a relation detector 233, a timing comparator 234, a close timing protection portion 235, and a finger allocation portion 236.

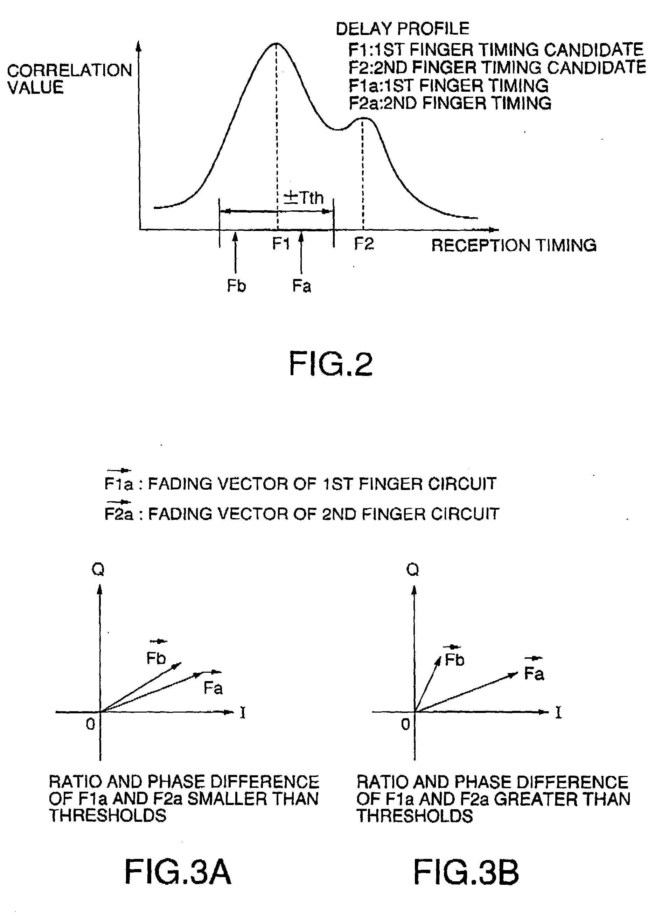

Supplied with the CDMA signals through the input terminal 21, namely, the specific signal, such as the pilot signal, the delay profile generator 231 despreads the CDMA signal to generates a delay profile, as exemplified in Fig. 2. The delay profile specifies a relationship between the reception timing signals and correlation values of a despread signal at each reception timing signal. The finger candidate selector 232 receives the delay profile from the delay profile generator 231 and decides a predetermined number of finger timing candidate signals, M in number, by successively selecting the reception timing signals from a greater one of the correlation values. The finger timing candidate signals and the reception timing signals are representative of finger timing candidates and reception timing, respectively.

The relation detector 233 is supplied with the finger timing candidate signals and finger timing signals assigned to the respective finger circuits and searches a closest one of the finger timing candidate signals to each finger timing signal to make the respective candidate signals correspond to the finger circuits. In other words, the relation detector 233 serves to make the respective candidate signals relate to the finger circuits or to make the respective finger timing candidates correspond to the reception timing. The timing comparator 234 compares the finger timing candidate signals with the reception timing signals allocated to the finger circuits currently used and detects the finger circuits which have the same reception timing signals.

Moreover, the close timing protection circuit 235 receives the reception timing signals of the finger circuits concerned with the same reception timing signals and decides whether or not close timing protection is to be executed when a close timing relation is detected between the reception timing signals, on the basis of a fading vector generated by a fading vector generator (will be described later) in a manner to be described later. In this connection, a combination of the delay profile generator 231, the finger candidate selector 232, the relation detector 233, and the timing candidate 234, and the close timing protection portion 235 may be called the path monitoring section for monitoring close ones of the path with reference to the reception timing, namely, the reception timing signals.

The finger allocation portion 236 selects the reception timing signals allocated to the finger section 24, on the basis of results of the close timing protection detected by the close timing protection portion and may be called the processing section for processing the paths to allocate the finger circuits. The selected reception timing signals are sent to the finger section 34 and to the relation detector 233.

In Fig. 1, the finger section 24 has zeroth through (N-1)-th ones 24(0) to 24(N-1) of the finger circuits each of which has a receiver portion 12(0) to 12(N-1), a fading vector generator 13(0) to 13(N-1), and a detector 14(0) to 14(N-0). Inasmuch as the zeroth through the (N-1)-th finger circuits 24(0) to 24(N-1) are similar in operation and structure to one another, description will be mainly made only about either one or a plurality of the zeroth through the (N-1)-th finger circuits 24 without any suffixes.

At any rate, each receiver portion 12 receives the CDMA signal in response to the reception timing signals sent from the finger allocation circuit 236 and carries out a despread operation at each reception timing indicated by the reception timing signals to produce despread data signals. Each of the fading vector generators 13 executes path estimation in response to the despread signal sent from each receiver portion. During this path estimation, a fading vector is calculated by each fading vector generator and is representative of an inclination of orthogonal axes defined by an in-phase axis and a quadrature axis determined on a phase plane and a magnitude or an amplitude of each radio waves received through the multi-path. The magnitude or the amplitude of each radio wave stands for a degree of certainty of each path and specifies a high reliable path as the magnitude becomes high. Each fading vector calculated in the fading vector generators 13 in the above-mentioned manner is delivered to the close timing protection portion 235 and the detector 14. Each detector 14 detects the received data signal in response to the despread data signal and the fading vector. Specifically, the received data signal is detected from the despread data signal with reference to a phase component of the fading vector.

The received data signals are sent from the finger circuits 24 to the rake section 25 which includes a rake synthesizer 251. The rake synthesizer 251 rakes or gathers the received data signals by giving weights to the received data signals and produces the reception data signal or a reproduced signal through the output terminal 22.

With the above-mentioned structure, judgement is made about whether or not a plurality of paths are received by different finger circuits and are different from one another, when the reception timing for each path is very close to one another. When the plurality of the paths are judged to be different from each other, current allocation of the plurality of the paths to the finger circuits is kept unchanged. In other words, the current allocation is protected without being changed. As a result, when the plurality of the paths which are temporarily close to each other are separated from each other again with lapse of time, reallocation of the finger circuits becomes unnecessary. Each path mentioned above indicates a transmission path between the transmitter side and the receiver side.

In order to accomplish the above-mentioned object, the delay profile generator 231, the finger candidate selector 232, the relation detector 233, and the timing comparator 234 serve to detect whether or not the finger circuits which have very close reception timing are present within the finger circuits. For brevity of description, the finger circuits which have very close reception timing may be simply called close timing finger circuits.

In addition, when the close timing finger circuits are present within the finger circuits, the close timing protection portion 235 is operable in response to the fading vectors of the fading vector generators 13 included in the finger circuits 24 to detect the magnitude and the inclination or an angle of each fading vector and to calculate a magnitude ratio between the fading vectors and an angle difference between the fading vectors. Furthermore, the close timing protection portion 235 compares each magnitude ratio and each angle difference between the fading vectors with a predetermined magnitude ratio threshold and a predetermined angle threshold which will be called first and second thresholds, respectively.

When the magnitude ratio or the angle difference is greater than the first threshold or the second threshold, the paths assigned to the close timing finger circuits are judged to be inherently different from each other. In this case, allocation of the close timing finger circuits is kept unchanged. This shows that it is possible to protect the close timing finger circuits from being removed from the current allocation.

On the other hand, when both the magnitude ratio and the angle difference are smaller than the first and the second thresholds, the paths are judged to be inherently identical with each other. In this case, only one of the close timing finger circuits is put into operation while the remaining close timing finger circuits are kept unused and removed from the current allocation.

Now, description will be made about a detection method of close timing paths and about a judgement method of judging the close timing paths. It is to be noted that the detection method is carried out by using the delay profile generator 231, the finger candidate selector 232, the relation detector 233, and the timing comparator 234 while the judgement method is carried out by the use of the close timing protection portion 235.

At first, the detection method of detecting the close timing paths will be described below. The pilot signal of the CDMA signal is delivered from the input terminal 21 to the delay profile generator 231 included in the searcher 23. The delay profile generator 231 carries out a despread operation of the pilot signal by the use of a spread replica signal to produce the delay profile as illustrated in Fig. 2. Herein, it is to be noted that the delay profile is representative of a relationship between the reception timing of the pilot signal and correlation values obtained by the despread operation at the reception timing and that the correlation values are represented by electric power of the pilot signal received at the reception timing.

In the meanwhile, description will be directed to a relationship between the paths and the reception timing for a better understanding of this invention. When the CDMA signal is received by the CDMA receiver through the same paths, the reception timing for both the paths becomes equal to each other. However, it is noted that, when the CDMA signal is received at the same reception timing, the paths for the are not always identical with each other. From this fact, it is understood that the delay profile provides the relationship between the reception timing and the correlation values but never provides a strict relationship between the paths and the correlation values. In general, it may be said that a reception state of the CDMA signal is improved at the reception timing with an increase of the correlation values.

The finger candidate selector 232 is supplied with the delay profile to select the finger timing candidates. Such a method of selecting the finger timing candidates by the finger candidate selector 232 will be described with reference to Fig. 2. Herein, it is assumed that the finger candidate selector 232 successively selects first through M-th ones of the correlation values from a greatest value thereof and decides first through M-th ones of the reception timing that correspond to the first through the M-th correlation values, respectively, and which may be called first through M-th finger timing candidates. In Fig. 2, the finger candidate selector 232 selects first and second local maximal ones of the correlation values and decides first and second reception timing candidates F1 and F2 as the first and the second finger timing candidates.

The first and the second finger timing candidates F1 and F2 decided by the finger candidate selector 232 are sent to the relation detector 233 which is supplied from the finger allocation portion 236 with allocated reception timing signals representative of allocated reception timing.

The relation detector 233 is operable in a manner to be mentioned below. In order to describe the operation of the relation detector 233, it is assumed that:

M is representative of the number of the finger timing candidates;

Ts(i), an i-th one of the finger timing candidates that is representative of the reception timing and that is variable between 0 and M-1;

Cs(i), an i-th one of the correlation values that is representative of the correlation value of the i-th finger timing candidate;

N, the number of the finger circuits;

Tf(j), a j-th one of the reception timing that is variable between 0 and N-1; and

Tth, a half of an acceptable timing range in which each finger timing candidate is allocated to the finger circuit.

The relation detector 233 is given the j-th reception timing Tf(j) related to each of the finger circuits 24, N in number, and determines the acceptable timing range ±Tth in relation to the j-th reception timing Tf(j). In addition, the relation detector 233 monitors whether or not either one of the finger timing candidates Ts(i) falls within the acceptable timing range ±Tth. In consequence, the relation detector 233 searches the finger timing candidate or candidates Ts(i) within the acceptable timing range ±Tth. Specifically, the operation of the relation detector 233 is defined by:

$$/Ts(i) - Tf(j)/ \leqq Tth.$$

It is to be noted that, when a plurality of the finger timing candidates Ts(i) belong to the acceptable timing range ±Tth, the relation detector 233 selects only one of the finger timing candidates that corresponds to a maximal one of the correlation values Cs(i) within the acceptable timing range ±Tth. On the other hand, when no finger timing candidate is present within the acceptable timing range ±Tth, no allocation can be made about the finger circuits.

From this fact, it may be said that, when the i-th finger timing candidate is selected in relation to the j-th finger circuit, an i-th one of candidate finger circuits that corresponds to the i-th finger timing candidate is made to correspond to the j-th finger circuit or simply the i-th candidate finger circuit corresponds to the j-th finger circuit. A correspondence between the candidate finger circuit and the finger circuit is produced from the relation detector 233 as a correspondence signal. The correspondence signal also represents an acceptable allocation and may be called an allocation signal.

At any rate, the relation detector 233 supplies the timing comparator 234 with information related to the finger timing candidate or candidates, the candidate finger circuit or circuits, together with the reception timing of each finger circuit and the correspondence signal.

In the timing comparator 234, comparison is made about the finger timing candidates made to correspond to the finger circuits which are currently used, to detect whether or not the same finger timing candidates are present among the finger timing candidates. Inasmuch as the finger circuits which have the same finger timing candidates are operated in response to very close reception timing, they will be referred to as close timing finger circuits operated at close reception timing.

Referring to Fig. 2, the above-mentioned operation will be described more in detail. Supplied from the delay profile generator 231 with the delay profile illustrated in Fig. 2, the finger candidate selector 232 selects the first and the second finger timing candidates F1 and F2 corresponding to first and second local maximal ones of the correlation values. The relation detector 233 compares the reception timing of each finger circuit with the first and the second finger timing candidates F1 and F2. In the illustrated example, the relation detector 233 defines the acceptable timing range ±Tth in relation to the first finger timing candidate F1 and detects the reception timing within the acceptable timing range ±Tth. In the illustrated example, two of the reception timing depicted by F1a and F2a fall within the acceptable timing range ±Tth and are assigned to the first finger circuits 24(1) and 24(2), respectively. Therefore, the first finger timing F1a and the second finger timing F2a are sent as first and second timing options to the timing comparator 234 in relation to the first finger timing candidate F1.

The timing comparator 234 compares the first timing option F1a with the second timing option F2a and detects whether or not the first and the second timing options F1a and F2a are concerned with the same timing candidate. In the example illustrated in Fig. 2, the first and the second timing options F1a and F2a are concerned with the same timing candidate F1. Accordingly, the timing comparator 234 detects, as the close timing finger circuits operated at the close reception timing, the first and the second finger circuits 24(1) and 24(2) corresponding to the first and the second timing options F1a and F2a. Thus, the close timing finger circuits are detected in the manner mentioned above.

Next, the description will be made about the judgement method of judging the close timing paths. Specifically, the close timing protection portion 235 judges whether or not the paths are identical with each other. For this purpose, judgement is made about whether or not the despread signals received by the close timing finger circuits are received through the same path.

The close timing protection portion 235 is given information sent from the timing comparator 234 and information sent from the fading vector generators 13 to judge whether or not the protection is necessary in connection with each of the close timing finger circuits. As mentioned above, the information sent from the timing comparator 234 includes information related to the reception timing of all the finger circuits currently used and information related to the close timing finger circuits.

The information sent from the fading vector generators 13 is specified by the fading vectors. As mentioned before, signals, such as the CDMA signal, transmitted from the transmitter side are subjected to reflection, diffraction, and attenuation during transmission through the path and are not normally received as they stand. In order to correctly reproduce each symbol subjected to orthogonal modulation, the receiver side should accurately match, on a phase plane, an in-phase axis and a quadrature axis of the received data signal with those of the transmitter side. In this event, each symbol subjected to the orthogonal modulation can be represented by a vector which has an amplitude or a magnitude component and a phase or an angle component representative of an inclination from the in-phase axis or the quadrature axis. Such a vector may be called a fading vector.

As already described before, each fading vector generator 13 carries out the path estimation on the basis of the despread signal to produce the fading vector specified by the amplitude (magnitude) and the phase.

Herein, consideration is made about calculating the fading vector. It is assumed that PL(i) is representative of a reference pilot symbol where i is a variable between 0 and K-1; D(i), a received pilot symbol; K, the number of each pilot symbol, and X*, a complex conjugate. The above-mentioned PL(i) and D(i) are also assumed to be represented by complex numbers.

Under the circumstances, the fading vector depicted by F is given by:

$$F = (\sum_{i=0}^{N-1} D(i)PL(i)^*)/K \qquad (1)$$

From Equation (1), it is readily understood that the fading vector F is varied in phase and amplitude in dependency upon a difference between the in-phase and the quadrature axes of the received pilot symbol D(i) and those of the reference pilot symbol. This is because the in-phase and the quadrature axes of the received pilot symbol D(i) are varied through the path by the reflection, the diffraction, and the attenuation. This shows that, when two signals which are different in both phase and amplitude from each other, they may be judged to be transmitted through different paths even when reception timing is very close to each other.

The close timing protection portion 235 is coupled to the fading vector generators 13 of the first through the N-th finger circuits 24 and supplied with the fading vectors which are given from the close timing finger circuits decided by the timing comparator 234. The close timing protection portion 235 collects the fading vectors and detects the magnitude or amplitude ratio between the fading vectors and the phase difference therebetween. In addition, judgement is made by the close timing protection portion 235 about whether or not a different path is included in the paths concerned with the fading vectors.

Referring to Figs. 3A and 3B, operation of the close timing protection portion 235 will be described in detail. In Fig. 3A, it is assumed that the amplitude ratio and the phase difference between the fading vectors F1a and F2a of the first and the second finger circuits 24(1) and 24(2) are smaller than the first and the second thresholds. In this event, the close timing protection portion 235 judges that both the first and the second finger circuits are assigned to the same path and it puts either one of the first and the second finger circuits into an inactive state with the remaining one kept in an active state.

On the other hand, it is assumed in Fig. 3B that the amplitude ratio or the phase difference between the fading vectors F1a and F2a are not smaller than the first and the second thresholds. In this state, the close timing protection portion 235 judges that the first and the second finger circuits are assigned to individual and different paths and that the reception timing is close by chance. As a result, the close timing protection portion sets a positive value into protection counters included in the first and the second finger circuits, as will become clear.

This means that the first and the second finger circuits are protected from being allocated to an single path and this operation may be called a close timing protection operation. During the close timing protection operation, both the first and the second finger circuits can be allocated to the different paths.

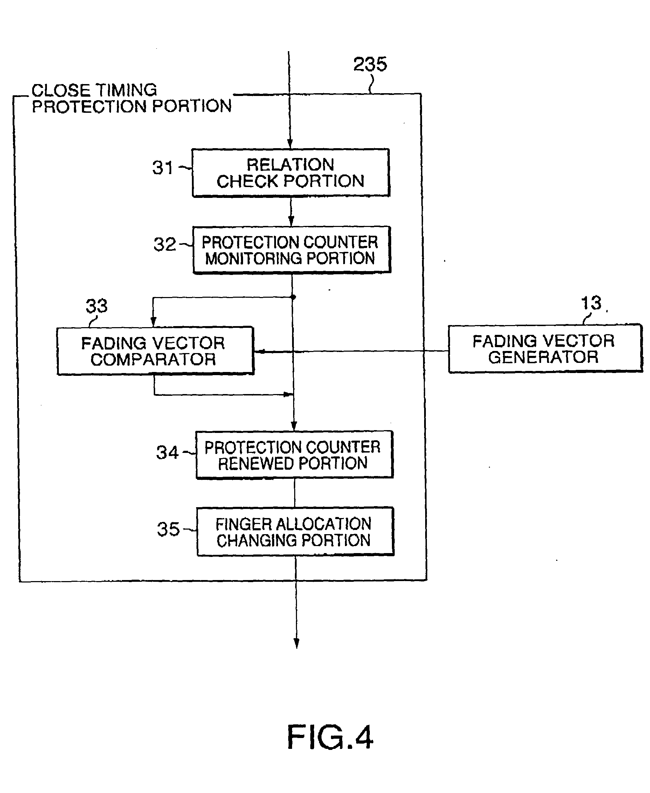

Referring to Fig. 4, the close timing protection portion 235 has a relation check portion 31 operable in a manner to be described below and a protection counter monitoring portion 32 for monitoring a protection counter included in each finger circuit. The illustrated relation check portion 31 is supplied from the timing comparator 234 with the information related to the reception timing of every finger circuit being used and the information related to the close timing finger circuits. Responsive to the above-mentioned information, the relation check portion 31 checks whether or not the finger circuits include a finger circuit candidate (a related finger circuit) related to the same finger circuit candidate as the finger circuit in question which may be called a selected finger circuit. When detection is made by the relation check portion 31 about existence of the finger circuit candidate related to the same finger circuit candidate, the protection counter monitoring portion 32 monitors whether or not the protection counter of the finger circuit candidate is not smaller than 0. If the protection counter monitoring portion 32 detects that the protection counter of a certain finger circuit is equal to or smaller than 0, the fading vector of the certain finger circuit is given from the fading vector generator of the certain finger circuit to the close timing protection portion 235, together with the fading vector of the finger circuit related to the same finger circuit candidate.

In the close timing protection portion 235, both the fading vectors are received by a fading vector comparator 33. The fading vector comparator 33 compares the amplitude ratio between of the fading vectors and the phase difference between the fading vectors with the first and the second thresholds.

In Fig. 4, a protection counter renewal portion 34 renews a count value of the protection counter in response to a check result of the protection counter monitoring portion 32 or to a result of comparison of the fading vector comparator 33. Responsive to the renewed count given from the protection counter renewal portion 34, a finger allocation changing portion 35 decides a finger circuit which is put into an unused state.

In the above-mentioned close timing protection portion 235, the relation check portion 31 checks whether or not a close timing finger circuit is present at each of the finger circuits that are being used. If the close timing finger circuits is present, the fading vector comparator 33 detects whether or not the paths for the close timing finger circuits are different from one another. When the paths for the close timing finger circuits include the same paths, the finger allocation changing portion 35 puts only one of the close timing finger circuits into the active state and puts the remaining close timing finger circuits into the unused state.

Alternatively, when the fading vector comparator 33 detects that the paths for the close timing finger circuits are different from one another, the protection counter is set into a positive value so as to monitor for a monitoring time whether or not the reception timing among each close timing finger circuit becomes far from one another When the reception timing is not remote from one another during the monitoring time, the finger allocation changing portion 35 leaves only one of the close timing finger circuits and put each of the remaining close timing finger circuits into the unused state.

When judgement is made about the fact that different paths are present as a result of detecting the amplitude ratio and the phase difference between the fading vectors of the finger circuits related to the finger circuit candidate, the protection counter is set to judge whether or not the reception timing is gradually far away.

Herein, description will be directed to a method of setting the protection counter operated in the above-mentioned manner.

It is surmised that a count value of "-1" is set in the protection counter of a specific finger circuit which is subjected to no protection related to the close timing. In this event, it is also assumed that the specific finger circuit is judged by the timing comparator 234 to be one of the close timing finger circuits. In addition, the result of comparison in the fading vector comparator 33 shows that the amplitude ratio and the phase difference concerned with the fading vector of the specific finger circuit exceeds the first and the second thresholds. Under the circumstances, the protection counter is set to the positive value of, for example, 10 after the path for the specific finger circuit is judged to be different from the path for the remaining close timing finger circuit. In this state, when the timing comparator 234 again judges that the specific finger circuit is one of the close timing finger circuits, the protection counter decreases the predetermined value by one.

After lapse of a predefined time, when the count value of the protection counter is smaller than 0, the protection related to the close timing is released. As a result, either one of the specific finger circuit and another close timing finger circuit is kept active while the remaining one is kept unused.

Likewise, when the timing comparator 234 judges that there is no close timing finger circuit related to the same finger circuit candidate, the protection counter is returned back to an initial value of "-1" to stop the close timing protection operation mentioned above.

Thus, the finger allocation portion 236 illustrated in Fig. 1 is supplied from the close timing protection portion 235 with reception timing information concerned with the finger circuits which are being used and which are indicated by the close timing protection portion 235. It is to be noted here that the close timing protection portion 235 indicates that the finger circuits which are being used are selectively put into the active or the unused state. The finger circuit or circuits put into the unused state may be allocated to another reception timing option that is not used by any other finger circuit candidates. Inasmuch as such unused reception timing can be allocated to reception timing at which high correlation values are obtained, it is possible to improve a reception characteristic of the CDMA signal.

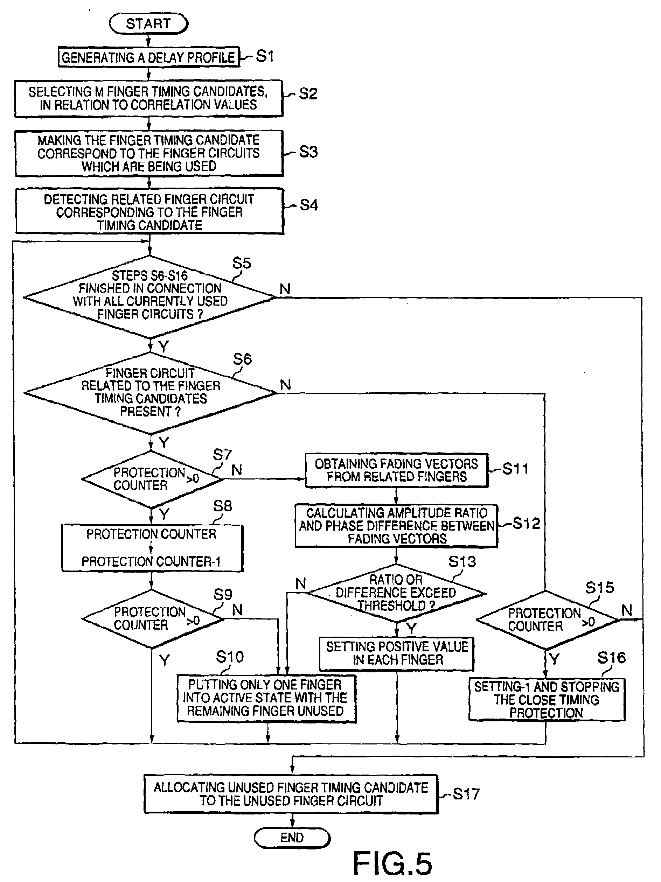

Referring to Fig. 5, the operation of the searcher 23 (Fig. 1) will be described in detail. In a flow chart illustrated in Fig. 5, the CDMA signal is received through the input terminal 21 and is sent to the delay profile generator 231 to produce a delay profile as shown in Fig. 2 (step S1). The delay profile is sent to the finger candidate selector 232. Responsive to the delay profile, the finger candidate selector 232 determines the finger timing candidates by successively deriving the correlation values, M in number, from a greater one to select the reception timing corresponding to the derived correlation values (step S2).

The relation detector 233 compares the finger timing candidates with the reception timing used in each of the finger circuits to make the finger timing candidates correspond to the finger circuits which are being used (step S3). The relation detector 233 detects the reception timing $Tf(j)$ assigned to each of the finger circuits, N in number, and compares the reception timing $Tf(j)$ for each finger circuit with the finger timing candidates $Ts(i)$, M in number. In this case, the relation detector 233 searches for the finger timing candidates which fall within the range of $\pm Tth$ with respect to each reception timing $Tf(j)$. Herein, it is noted that, when a plurality of the finger timing candidates fall within the range of $\pm Tth$, only one of the finger timing candidates that corresponds to a greatest one of the correlation values $Cs(i)$ is selected by the relation detector 233. Thus, the finger timing candidates are made to correspond to the reception timing assigned to each finger circuit being used, by the relation detector 233. At any rate, the relation detector 233 supplies the timing comparator 234 with information related to correspondence between the finger timing candidates and the reception timing, the information related to the finger timing candidates, and the information related to the reception timing.

The timing comparator 234 detects the finger circuit or circuits currently used and concerned with the same finger timing candidate by comparing the finger timing candidates and the reception timing (step S4).

The information of the finger circuit concerned with the same finger timing candidate detected, the information of each finger circuit, and the information of the finger timing candidates are delivered from the timing comparator 234 to the close timing protection portion 235.

By the relation check portion 31 in the close timing protection portion 235, detection is made about whether or not a finger circuit concerned with the same finger timing candidates is included in the finger circuits to be processed. If the finger circuit is present among the finger circuits to be processed (step S6, Yes), the protection counter monitoring portion 32 (Fig. 2) monitors the count value of the protection counter included in each of the finger circuits which are being used and judges whether or not the finger circuit is subjected to close timing protection (step S7). To this end, the protection counter monitoring portion 32 monitors the count value of the protection counter and judges the finger circuit to be subjected to the close timing protection when the count value is greater than 0.

When the count value of the protection counter is greater than 0, judgement is made by the close timing protection portion 235 about the fact that the finger circuit in question is subjected to the close timing protection (step S7, Yes). In this event, the protection counter of the finger circuit in question is decreased by one (step S8) to obtain a new count value. The new count value is compared to 0 to detect whether or not the new count value is greater than 0 (step S9). When the new count value is smaller than 0 (step 9, No), the step S9 is followed by a step S10 at which the close timing protection is released. At the step S10, only one of the finger circuits among the close timing finger circuits is kept at the active state with the remaining close timing finger circuits put into the unused state. Thereafter, the step S10 is succeeded by the step S5 at which similar processing is carried out in connection with a next one of the finger circuits.

When the count value of the protection counter is greater than 0, the step S10 proceeds to the step S5 without any processing.

At the step S7, let the protection counter take -1 as the count value. This shows that the close timing protection is not executed by the close timing protection portion 235. In this case, the close timing protection portion 235 is supplied with the fading vectors which are generated by the finger circuit in question and another finger circuit that is related to the finger circuit in question by the use of the same finger circuit candidate. At any rate, the close timing protection portion 235 obtains the fading vectors from the fading vector generators of the different finger circuits (step S11) and calculates the amplitude ratio and the phase difference between the fading vectors (step S12).

If either the amplitude ratio or the phase difference exceeds the first or the second threshold, as shown in Fig. 3B (step S13, Yes), the close timing protection portion 235 judges that the reception timing used in the finger circuit in question and another finger circuit happens to coincide with each other and must be inherently assigned to different paths. As a result, the step S13 is followed by a step S14 at which the protection counter of each finger circuit is set into the predetermined positive value and which is returned back to the step St to carry out processing in connection with another finger circuit.

On the other hand, when both the amplitude ratio and the phase difference does not exceed the first and the second thresholds, the step S13 proceeds to the step S10 at which the close timing protection is released, as mentioned before.

At the step S6, let no finger circuit which is currently used be present in connection with the same finger timing candidate. In this case, the step S6 is followed by a step S15 at which detection is made about whether or not the close timing protection is executed with respect to a finger circuit. When the count value of the protection counter in the finger circuit is greater than 0, namely, the close timing protection is being carried out (step S15, Yes), the protection counter of the finger circuit is set into -1 and the close timing protection is stopped (step S16).

When the close timing protection is not executed (the step S15, No), processing is carried out in connection with a next following finger circuit (step S5).

When processing is finished about all the finger circuits which are being used (step S5, Yes), the finger allocation portion 236 allocates finger timing candidates to the finger circuits. Specifically, an unused one of the finger circuits is in use and is given the finger timing candidate which has no relationship (step S17).

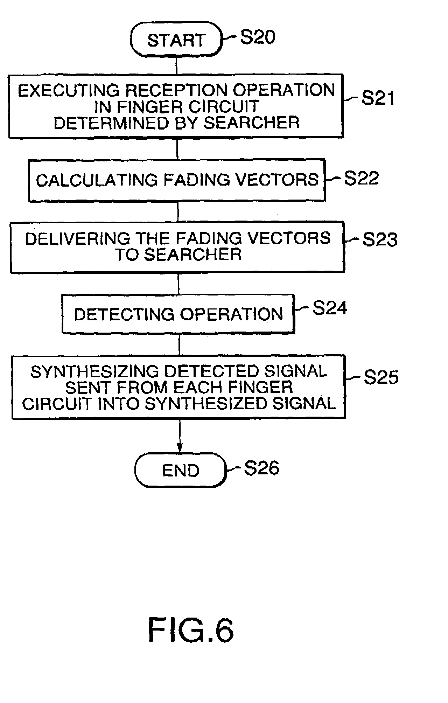

Referring to Fig. 6, description will be made about processing operation of the finger portion 24 illustrated in Fig. 1.

At first, reception operation and despread operation are executed by the use of those finger circuits which are allocated by the finger allocation portion 238 of the searcher 23 (step S21) and which will be referred to as allocated finger circuits hereinafter. In the allocated finger circuits 24 calculate the fading vectors from the despread signals by the use of the fading vector generators 13 thereof (step S22). The fading vectors are delivered to the close timing protection portion 235 of the searcher 23 (step S23)on one hand and to the detectors 14 of the allocated finger circuits 24 to be detected by the detectors 14 on the other hand (step S24). The detectors 13 of the allocated finger circuits 24 are supplied with both the despread signals and the fading vectors to produce detected signals from the despread signals with reference to the fading vectors. The detected signals are synthesized or raked by the rake synthesizer 251of the rake portion 25 into a synthesized signal which is sent as the reception data signal or the reproduction signal through the output terminal 22(step S25).

Briefly, the above-mentioned embodiment is effectively operable when the reception timing of a certain one of the finger circuits is very close to that of another finger circuit. Specifically, the fading vectors are produced by the fading vector generators 13 from the CDMA signals received by both the certain finger circuit and another finger circuit and are sent to the close timing protection portion 235. The close timing protection portion 235 calculates the amplitude ratio and the phase difference between the fading vectors and compares the amplitude ratio and the phase difference with the first and the second thresholds, respectively. When both the amplitude ratio and the phase difference are smaller than the first and the second thresholds, respectively, the close timing protection portion 235 judges that the CDMA signals are received through the same path by the certain finger circuit and another finger circuit. In this event, the close timing protection portion 235 keeps either one of the finger circuits active and stops the remaining one of the finger circuits.

On the other hand, when either the amplitude ratio or the phase difference exceeds the first threshold or the second threshold, the close timing protection portion 235 judges that the CDMA signals are received through different paths by the certain finger circuit and another finger circuit. In this case, each reception timing is kept unchanged in the certain finger circuit and another finger circuit and is used to receive the CDMA signals in each finger circuit.

In addition, the close timing protection portion 235 monitors the protection counter of each finger circuit to detect whether or not the close reception timing lasts for the predetermined duration. After lapse of the predetermined duration, the paths related to the close reception timing are judged to be allocated to different ones of the finger circuits. This shows that, when the reception timing related to the certain finger circuit is remote from the reception timing related to another finger circuit within the predetermined duration, it is unnecessary to reallocate each reception timing to different ones of the finger circuits.

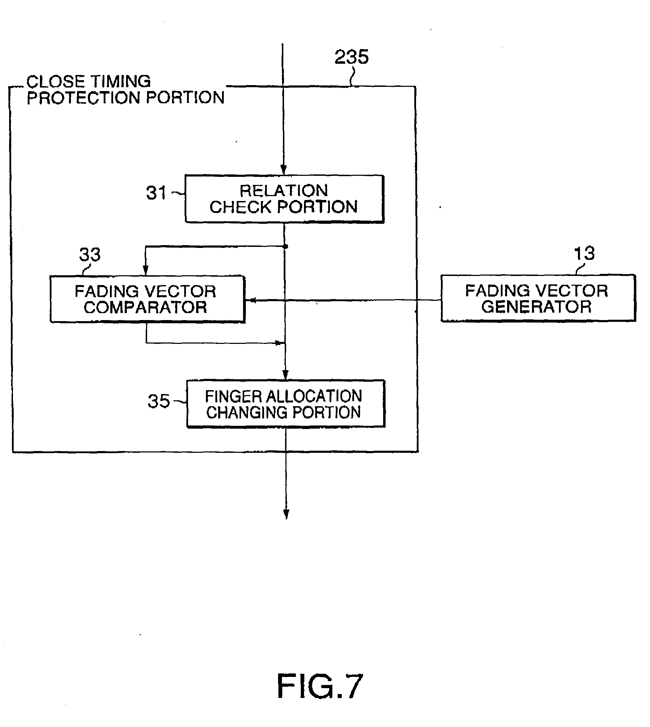

Referring to Fig. 7, a CDMA receiver according to a second embodiment of this invention is similar in structure and operation to that illustrated in Fig. 1 except that the close timing protection portion 235 shown in Fig. 7 is somewhat different in structure from that illustrated in Fig. 4. As shown in Fig. 7, the close timing reception portion 235 has neither the protection counter monitoring portion 32 nor the protection counter renewal portion 34, both of which are included in the close timing protection portion 235 illustrated in Fig. 4.

From this fact, it Is readily understood that the close timing protection portion 235 (Fig. 7) has no protection function carried out by using the protection counter. In other words, when the fading vector comparator 33 of the close timing protection portion 235 judges that the CDMA signals are received through different paths, different ones of the finger circuits are allocated to both the different paths without monitoring the predetermined duration set into the protection counters.

In the second embodiment, when the close reception timing for the CDMA signals is detected in connection with different finger circuits, comparison is made about the amplitude ratio and the phase difference between the fading vectors detected from the CDMA signals. If both the amplitude ratio and the phase difference do not exceed the first and the second thresholds, respectively, it is judged that the CDMA signals are received through the same. Either one of the CDMA signals received by the reception timing is removed from the allocation of the finger circuits to be allocated to another finger circuit that is unused. As a result, the reception characteristic can be improved with this embodiment.

In order to accomplish the above-mentioned operation, the close timing protection portion 235 illustrated in Fig. 7 at first selects a finger circuit which is to be processed and which may be called a selected finger circuit. When the selected finger circuit is related to the same finger timing candidate determined by the timing comparator 234, the close timing protection portion 235 detects the fading vectors produced from the CDMA signals received by the selected finger circuit and the finger circuit made to correspond to the finger timing candidate , so as to calculate the amplitude ratio and the phase difference between the fading vectors. Thereafter, the amplitude ratio and the phase difference are compared with the first and the second thresholds by the close timing protection portion 235, respectively. It may be said that the finger circuit made to correspond to the finger timing candidate may be called a related finger circuit.

If either the amplitude ratio or the phase difference exceed the first or the second thresholds, the close timing protection portion 235 judges that the CDMA signals received by the selected and the related finger circuit are received through different paths and keeps the allocation of the selected and the related finger circuits unchanged.

On the other hand, if both the amplitude and the phase difference do not exceed the first and the second thresholds, respectively, the close timing protection portion 235 judges that the CDMA signals received by the selected and the related finger circuits are received through the same path. In this event, either one of the CDMA signals is allocated to the selected finger circuit with the related finger circuit kept in an active state.

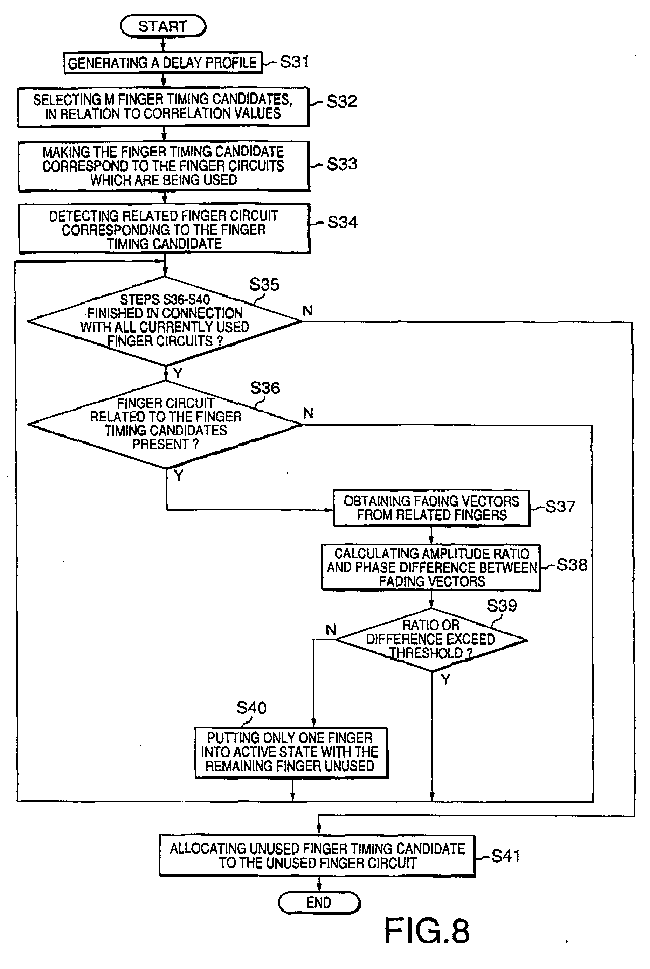

Referring to Fig. 8 along with Fig. 1, the operation will be described in connection with the searcher 23 according to the second embodiment of this invention. When the CDMA signal is given from the input terminal 21, the delay profile portion 231 produces the delay profile concerned with the received CDMA signal (step S31). Responsive to the delay profile, the finger candidate selector 232 obtains the finger timing candidates, M in number, by selecting the correlation values from greater ones with reference to the delay profile (step S32).

Given the finger timing candidates, the relation detector 233 compares the finger timing candidates with current reception timing of the CDMA signals assigned to the finger circuits which are being used. The relation detector 233 detects relations between the finger timing candidates and the current reception timing to find out relations between finger circuit candidates and current finger circuits (step S33). To this end, the relation detector 233 detects the finger timing candidates Ts(i) (i = 0 - M-1) in connection with each current reception timing Tf(j) (j = 0 - N-1) by searching, at every current reception timing, the finger timing candidates falling within a range between ±Tth. When a plurality of the finger timing candidates are present within the range between ±Tth, the finger timing candidate corresponding to a maximum one of the correlation values Cs(i) alone is selected as the finger timing candidate by the relation detector 233.

The timing comparator 234 is given relation information detected by the relation detector 233, the finger timing candidate information, and the current reception timing information.

The timing comparator 234 detects the current finger circuit related to the finger circuit candidate indicated by the finger timing candidate (step S34).

The close timing protection portion 235 is given the information of the current finger circuit which is related to the finger circuit candidate, along with the current reception timing related to information of the finger circuits which are being used.

The close timing protection portion 235 checks, by the use of the relation check portion 31 illustrated in Fig. 7, whether or not the related finger circuit related to the same finger timing candidate as the selected finger circuit is present (step S36). When it is judged that the related finger circuit is present in connection with the same finger timing candidate as the selected finger circuit (step S36, Yes), the fading vector comparator 33 is given the fading vector produced from the CDMA signal received by the selected finger circuit and the fading vector produced from the CDMA signal received by related finger circuit (step S37). The amplitude ratio and the phase difference between the fading vectors are calculated (step S38) and compared with the first and the second thresholds by the fading vector comparator 33.

If both the amplitude ratio and the phase difference are smaller than the first and the second thresholds, respectively (step S39, No), the finger allocation detector 236 only leaves the CDMA signal received by the single reception timing and removes the remaining CDMA signal received by the remaining reception timing from the allocation (step S40).

With this structure, the finger allocation detector 236 can allocate an unused finger reception timing to an unused finger circuit which is later kept in a used state.

When both the amplitude ratio and the phase difference are greater than the first and the second thresholds, respectively, it is judged that the CDMA signals given to the finger circuits are received through different paths. The finger circuits are continuously operated without the reception timing.

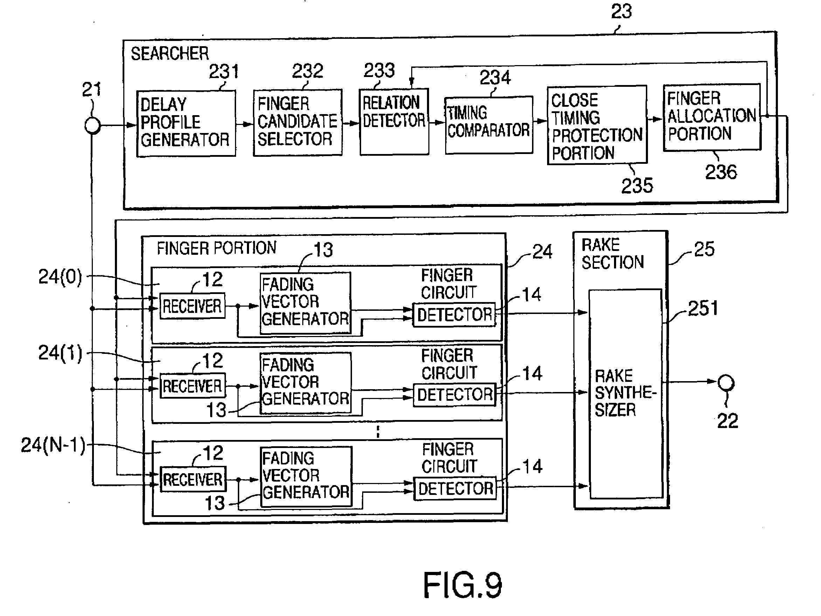

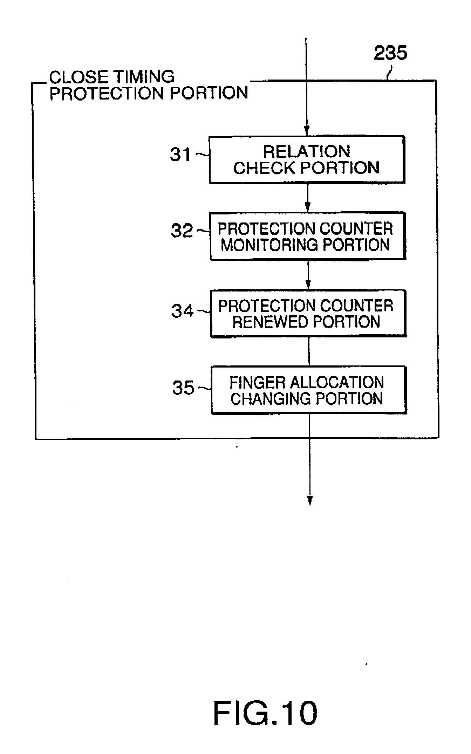

Referring to Figs, 9 and 10, a CDMA receiver according to a third embodiment of this invention is similar in structure and operation to that illustrated in Fig. 1 except that the close timing protection portion 235 illustrated in Fig. 9 is not connected to the fading vector generators 13. This means that no judgement is carried out in the CDMA receiver illustrated in Fig. 9 about whether or not CDMA signals are received through different paths by the use of the fading vectors. Therefore, the fading vectors are not sent to the close timing protection portion 235. In addition, the close timing protection portion 235 shown in Fig. 10 has no fading vector comparator included in those illustrated in Figs. 4 and 7.

Simply, when detection is made about the finger circuits operated at close reception timing, the CDMA receiver according to the third embodiment of this invention makes the finger circuits continuously receive the CDMA signal at the reception timing for a predetermined duration. When the reception timing of the CDMA signals is not remote from each other for the predetermined duration, either one of the CDMA signals is removed from the allocation by judging that both the CDMA signals are received through the same path.

In order to achieve the above-mentioned operation, the close timing protection portion 235 according to the third embodiment at first defines a selected finger circuit. When the timing comparator 234 detects that the selected finger circuit is concerned with a related finger circuit by the same finger timing candidate, the selected finger circuit continues receiving the CDMA signal for the predetermined duration. When the selected finger receiver is continuously or still concerned with the related finger receiver after lapse of the predetermined duration, either one of the CDMA signals received by the selected and the related finger circuits is removed from the allocation of the finger circuits.

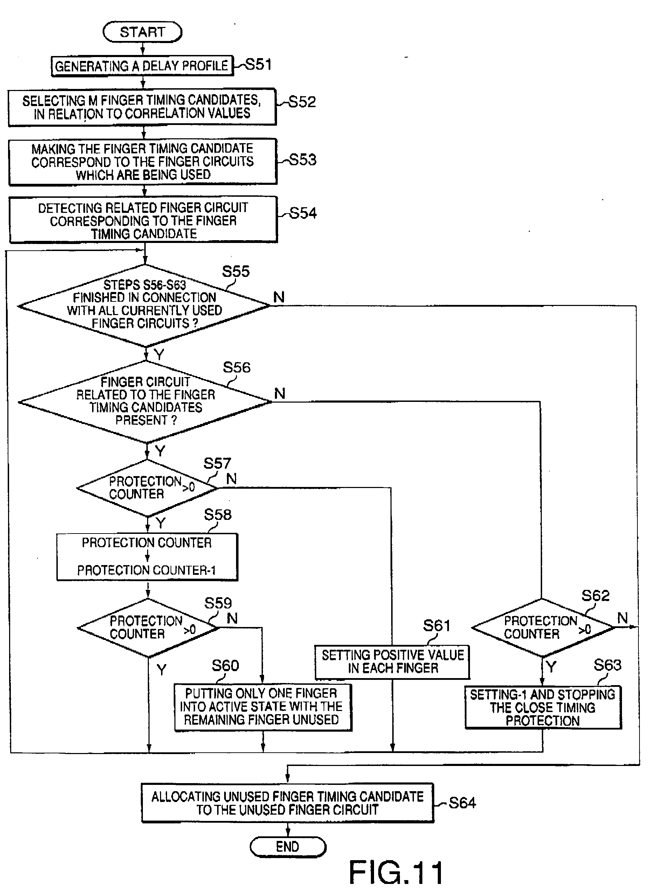

Referring to Fig. 11, description will be made about operation of the searcher according to the third embodiment of this invention. Supplied with the CDMA signal through the input terminal 21, the delay profile generator 231 delivers the delay profile concerned with the CDMA signal to the finger candidate selector 232 (step S51). The finger candidate selector 232 detects the finger timing candidates, M in number, by selecting the correlation values from greater ones (step S52).

The relation detector 233 compares the finger timing candidates with current reception timing currently used in each of the finger circuits to detect relations between the finger circuit candidates and the currently used finger circuits (steps S53). Specifically, the relation detector 233 searches the finger timing candidates Ts (i) (i =1 -( M-1)) within the range of ±Tth at every one of the currently used reception timing Tf(j) (j = 1 - (N-1)). As mentioned before in connection with the former embodiments, when a plurality of the finger timing candidates are present within the range, a single one of the finger timing candidate alone is selected which corresponds to a maximum correlation value Cs(i).

Like in the other CDMA receiver illustrated in Fig. 1, the timing comparator 234 is given the information representative of the relations related by the relation detector 233, the information representative of the finger timing candidates, and the information representative of the current reception timing related to each finger circuit currently used.

Timing comparator 234 detects the related finger circuit which is being used and which is related to the same finger timing candidate (step S54). The close timing protection portion 235 is supplied with the information concerned with the related finger circuit and the information representative of the current reception timing concerned with the finger circuits which are being currently used.

Responsive to the above-mentioned information, the relation check portion 31 of the close timing protection portion 235 checks whether or not the related finger circuit concerned with the same finger timing candidate as the selected finger circuit is present (step S56). When the relation check portion 31 detects that the related finger circuit in question is present which is concerned with the same finger timing candidate as the selected finger circuit (step S56, Yes), the protection counter monitoring portion 32 monitors whether or not the protection counter of the selected finger circuit is greater than 0, to judge whether or not the close timing protection is to be executed (step S57).

When the protection counter monitoring portion 32 of the close timing protection portion 235 detects that the protection counter is greater than 0 (step S57, Yes), the protection counter of the selected finger circuit is decreased by one (step S58) by the protection counter renewal portion 34 to produce a decreased count value. Next, judgement is made about whether or not the decreased count value is greater than 0 (step S59).

If the count value of the protection counter becomes equal to 0, namely, the close timing protection is released, the finger allocation changing portion 35 keeps only one of the finger circuits active and puts the remaining finger circuit into an unused state (step S60). Thereafter, processing is returned back to the step S55 of carrying out processing in connection with the next following finger.

If the count value of the protection counter is greater than 0 (step S59, Yes), no processing is carried out any more in connection with the finger circuit in question and proceeds to the step S55.

Herein, let it be judged at the step S57 that the count value of the protection counter is equal to -1, namely, no close timing protection is being executed. In this case, a preselected positive value is set into the protection counter of the finger circuit in question (step S61) and processing is finished in connection with this finger circuit in question. Processing proceeds to the next following finger circuit.

It is surmised that the relation detector 233 judges that no related finger circuit is present which is concerned with the same finger timing candidate as the selected finger circuit. Judgement is made about whether or not the protection counter of the selected finger circuit is greater than 0 (step S62). When the protection counter of the selected finger circuit is greater than 0, the protection counter is set into -1 and the close timing protection is stopped in connection with the selected finger circuit.

The finger allocation portion 236 allocates an unused one of the finger timing candidates to an unused finger circuit which is put into an active or used state.

In the above-mentioned embodiment, when the close reception timing relationship is still kept unchanged between two of the finger circuits after lapse of the predetermined duration, either one of the reception timing is changed by judging that the CDMA signals are received through different paths, although the paths are close to each other. With this structure, no reallocation of the finger circuits is necessary when the reception timing for both the finger circuits is remote from each other again.

While this invention has thus far been described in connection with a few embodiments thereof, it will be readily possible for those skilled in the art to put this invention into practice in various other manners. For example, close protection operation may be executed by using any other signals except the pilot signal included in the CDMA signals to keep two paths unchanged for the predetermined duration. In addition, the relation detector and the timing comparator may be included in the close timing protection portion while the whole function of the searcher mentioned above may be accomplished by software, although the illustrated searcher is separated into a plurality of hardware circuits.

**Claims**

1. A CDMA receiver operable in response to CDMA signals received through a plurality of paths to produce a reception signal, comprising:

   a path monitoring section for monitoring the plurality of the paths to detect whether or not first and second paths among the plurality of the paths in connection with the CDMA signals are identical with each other; and a processing section for processing the first and the second paths, to keep both the first and the second paths unchanged for a predetermined duration even when the first and the second paths are identical with each other and to thereafter release one of the first and the second paths for reception of the other CDMA signals.

2. A CDMA receiver as claimed in claim 1, wherein the path monitoring section monitors a pilot signal included in the CDMA signals while the first and the second paths are a selected path and a related path concerned with the selected path.

3. A CDMA receiver as claimed in claim 1, wherein the path monitoring section monitors the plurality of the paths by using reception timing of each CDMA signal received through the first and the second paths.

4. A CDMA receiver as claimed in claim 3, wherein the path monitoring section comprises:

a timing comparator for comparing first reception timing for the first path with second reception timing for the second path to detect a timing relation between the first reception timing and the second reception timing; and
a close detection portion for detecting whether or not the first reception timing is close to the second reception timing, to judge that the first and the second paths are identical with each other when the timing relation is close such that the first reception timing is close to the second reception timing.

5. A CDMA receiver as claimed in claim 4, wherein the close detection portion comprises:

a time monitoring portion for monitoring whether or not the close relation lasts for a predetermined duration between the first reception timing and the second reception timing; and
a judging portion for judging the first and the second paths as the identical path when the close relation lasts for the predetermined duration, and, otherwise, for judging the first and the second paths as different paths.

6. A CDMA receiver as claimed in claim 5, wherein the processing portion comprises:

an allocation portion for allocating either one of the first and the second paths to the CDMA signals with the remaining one released when the first and the second paths are judged as the identical path and, otherwise, for keeping the first and the second paths unchanged.

7. A CDMA receiver operable in response to CDMA signals received through a plurality of paths to produce a reception signal, said CDMA receiver comprising a plurality of demodulating circuits which are supplied with the CDMA signals to demodulate the CDMA signals into demodulated signals, respectively, and a rake portion for gathering the demodulated signals into the reception signal,

each of the demodulating circuits comprising:
a fading vector generator for generating, from each of the CDMA signals, a fading vector which has an amplitude and a phase;
the CDMA receiver comprising;
a path monitoring section for monitoring the plurality of the paths with reference to the fading vectors to detect whether first and second paths which are selected from among the plurality of the paths in connection with the CDMA signals are identical with each other or different from each other.

8. A CDMA receiver as claimed in claim 7, wherein the path monitoring section comprises:

a calculating portion for calculating an amplitude ratio and a phase difference between the fading vectors concerned with the first and the second paths;
a comparator for comparing the amplitude ratio and the phase difference with first and second thresholds, respectively;
a judging portion for judging the first and the second paths are identical with each other when both the amplitude ratio and the phase difference are smaller than the first and the second thresholds, respectively.

9. A CDMA receiver as claimed in claim 8, wherein the judging portion judges the first and the second paths are different from each other when either the amplitude ratio or the phase difference is not greater than the first threshold or the second threshold.

10. A CDMA receiver as claimed in claim 9, wherein the path monitoring section monitors, together with the fading vectors, the plurality of the paths by using reception timing of each CDMA signal received through the first and the second paths.

11. A CDMA receiver as claimed in claim 10, wherein the path monitoring section comprises:

a timing comparator for comparing first reception timing for the first path with second reception timing for the second path to detect a timing relation between the first reception timing and the second reception timing; and
a close detection portion for detecting whether or not the first reception timing is close to the second reception timing, to judge that the first and the second paths are identical with each other when the timing relation is close such that the first reception timing is close to the second reception timing.

12. A CDMA receiver as claimed in claim 11, wherein the close detection portion comprises:

a time monitoring portion for monitoring whether or not the close relation lasts for a predetermined duration between the first reception timing and the second reception timing; and

a judging portion for judging the first and the second paths as the identical path when the close relation lasts for the predetermined duration, and, otherwise, for judging the first and the second paths as different paths.

13. A CDMA receiver operable in response to CDMA signals received through a plurality of paths to produce a reception signal, said CDMA receiver comprising a plurality of demodulating circuits which are supplied with the CDMA signals to demodulate the CDMA signals into demodulated signals, respectively, and a rake portion for gathering the demodulated signals into the reception signal,

each of the demodulating circuits comprising:
a fading vector generator for generating, from each of the CDMA signals, a fading vector which has an amplitude and a phase;
the CDMA receiver comprising:
means for detecting a close relation between selected reception timing for a selected one of the CDMA signals received by one of the demodulating circuits and related reception timing for the other one of the CDMA signals received by the other one of the demodulating circuits;
means, which is supplied with a first fading vector produced from the one of the CDMA signals by the one of the demodulating circuits and a second fading vector produced from the other one of the CDMA signals by the other one of the demodulating circuits, for comparing an amplitude ratio and a phase difference between the first and the second fading vectors;
means for changing either the selected reception timing and the related reception timing when both the amplitude ratio and the phase difference are smaller than first and second thresholds, respectively; and
means for receiving the one and the other one of the CDMA signals at the selected and the related reception timing, respectively, when either the amplitude ratio or the phase difference is greater than the first and the second thresholds, respectively.

14. A CDMA receiver operable in response to CDMA signals received through a plurality of paths to produce a reception signal, said CDMA receiver comprising a plurality of demodulating circuits which are supplied with the CDMA signals to demodulate the CDMA signals into demodulated signals, respectively, and a rake portion for gathering the demodulated signals into the reception signal,

the CDMA receiver comprising:
means for detecting a close relation such that selected reception timing assigned to one of the demodulating circuits to receive the CDMA signals at the selected reception timing is close to the other reception timing assigned to the other one of the demodulating circuits to receive the CDMA signals at the other reception timing;
means for allocating the one and the other demodulating circuits to the selected reception timing and the other reception timing for a predetermined duration; and
means for changing either one of the selected reception timing and the other reception timing to another reception timing when the close relation lasts after lapse of the predetermined duration.

15. A CDMA receiver operable in response to CDMA signals received through a plurality of paths to produce a reception signal, said CDMA receiver comprising a plurality of demodulating circuits which are supplied with the CDMA signals to demodulate the CDMA signals into demodulated signals, respectively, and a rake portion for gathering the demodulated signals into the reception signal,

the CDMA receiver comprising;
means for detecting a close relation such that selected reception timing assigned to one of the demodulating circuits to receive the CDMA signals at the selected reception timing is close to the other reception timing assigned to the other one of the demodulating circuits to receive the CDMA signals at the other reception timing;
means, which is supplied with a first fading vector produced from the one of the CDMA signals by the one of the demodulating circuits and a second fading vector produced from the other one of the CDMA signals by the other one of the demodulating circuits, for comparing an amplitude ratio and a phase difference between the first and the second fading vectors;
means for allocating the one and the other demodulating circuits to the selected reception timing and the other reception timing for a predetermined duration when either the amplitude ratio or the phase difference is greater than first or second threshold; and
means for changing either one of the selected reception timing and the other reception timing to another reception timing when the close relation lasts after lapse of the predetermined duration.

16. A CDMA receiver operable in response to CDMA signals received through a plurality of paths to produce a reception signal, said CDMA receiver comprising a plurality of finger circuits which are supplied with the CDMA signals to demodulate the CDMA signals into demodulated signals, respectively, and a rake portion for gathering the demodulated signals into the reception signal,

the CDMA receiver comprising:
a delay profile generator for generating a delay profile by using the CDMA signals received;
a finger candidate selector for selecting, from the delay profile, a predetermined number of finger timing candidates which correspond to finger circuit candidates;
a relation detector for making the finger timing candidates relate to related reception timing which is assigned to each of the finger circuits currently used and which is close to each of the finger timing candidates;
a timing comparator for comparing the related reception timing and each of the finger timing candidates to detect a related one of the finger circuits that is related to each of the finger timing candidates and which is being currently used;
a close timing protection portion for detecting whether or not each of the finger timing candidates is close to the related reception timing to produce a relation signal representative of a relation between each of the finger timing candidates and the related reception timing; and
a finger allocation portion for allocating the reception timing to the finger circuits in accordance with the relation signal.

FIG.1

DELAY PROFILE
F1:1ST FINGER TIMING CANDIDATE
F2:2ND FINGER TIMING CANDIDATE
F1a:1ST FINGER TIMING
F2a:2ND FINGER TIMING

CORRELATION
VALUE

±Tth

F1

F2    RECEPTION TIMING

Fb    Fa

## FIG.2

$\overrightarrow{F1a}$ : FADING VECTOR OF 1ST FINGER CIRCUIT

$\overrightarrow{F2a}$ : FADING VECTOR OF 2ND FINGER CIRCUIT

Q

$\overrightarrow{Fb}$

Fa

0    I

Q

$\overrightarrow{Fb}$

$\overrightarrow{Fa}$

0    I

RATIO AND PHASE DIFFERENCE
OF F1a AND F2a SMALLER THAN
THRESHOLDS

RATIO AND PHASE DIFFERENCE
OF F1a AND F2a GREATER THAN
THRESHOLDS

## FIG.3A

## FIG.3B

235

CLOSE TIMING
PROTECTION PORTION

31 — RELATION
CHECK PORTION

32 — PROTECTION COUNTER
MONITORING PORTION

33
FADING VECTOR
COMPARATOR

13
FADING VECTOR
GENERATOR

34 — PROTECTION COUNTER
RENEWED PORTION

35 — FINGER ALLOCATION
CHANGING PORTION

# FIG.4

START

GENERATING A DELAY PROFILE — S1

SELECTING M FINGER TIMING CANDIDATES, IN RELATION TO CORRELATION VALUES — S2

MAKING THE FINGER TIMING CANDIDATE CORRESPOND TO THE FINGER CIRCUITS WHICH ARE BEING USED — S3

DETECTING RELATED FINGER CIRCUIT CORRESPONDING TO THE FINGER TIMING CANDIDATE — S4

S5
STEPS S6-S16 FINISHED IN CONNECTION WITH ALL CURRENTLY USED FINGER CIRCUITS ?  N

Y

S6
FINGER CIRCUIT RELATED TO THE FINGER TIMING CANDIDATES PRESENT ?  N

Y

S7
PROTECTION COUNTER >0  N

OBTAINING FADING VECTORS FROM RELATED FINGERS — S11

Y

S8
PROTECTION COUNTER
↓
PROTECTION COUNTER-1

CALCULATING AMPLITUDE RATIO AND PHASE DIFFERENCE BETWEEN FADING VECTORS — S12

S13
N   RATIO OR DIFFERENCE EXCEED THRESHOLD ?

S9
PROTECTION COUNTER >0  N

Y

S15
PROTECTION COUNTER >0  N

S10
PUTTING ONLY ONE FINGER INTO ACTIVE STATE WITH THE REMAINING FINGER UNUSED

SETTING POSITIVE VALUE IN EACH FINGER

Y

S16
SETTING-1 AND STOPPING THE CLOSE TIMING PROTECTION

ALLOCATING UNUSED FINGER TIMING CANDIDATE TO THE UNUSED FINGER CIRCUIT — S17

END

FIG.5

START )— S20

EXECUTING RECEPTION OPERATION
IN FINGER CIRCUIT
DETERMINED BY SEARCHER ⎱— S21

CALCULATING FADING VECTORS ⎱— S22

DELIVERING THE FADING VECTORS
TO SEARCHER ⎱— S23

DETECTING OPERATION ⎱— S24

SYNTHESIZING DETECTED SIGNAL
SENT FROM EACH FINGER
CIRCUIT INTO SYNTHESIZED SIGNAL ⎱— S25

END )— S26

# FIG.6

235

CLOSE TIMING
PROTECTION PORTION

31 — RELATION
CHECK PORTION

33
FADING VECTOR
COMPARATOR

13
FADING VECTOR
GENERATOR

35 — FINGER ALLOCATION
CHANGING PORTION

FIG.7

START

GENERATING A DELAY PROFILE — S31

SELECTING M FINGER TIMING CANDIDATES, IN RELATION TO CORRELATION VALUES — S32

MAKING THE FINGER TIMING CANDIDATE CORRESPOND TO THE FINGER CIRCUITS WHICH ARE BEING USED — S33

DETECTING RELATED FINGER CIRCUIT CORRESPONDING TO THE FINGER TIMING CANDIDATE — S34

S35
STEPS S36-S40 FINISHED IN CONNECTION WITH ALL CURRENTLY USED FINGER CIRCUITS ?  N

Y

S36
FINGER CIRCUIT RELATED TO THE FINGER TIMING CANDIDATES PRESENT ?  N

Y

OBTAINING FADING VECTORS FROM RELATED FINGERS — S37

CALCULATING AMPLITUDE RATIO AND PHASE DIFFERENCE BETWEEN FADING VECTORS — S38

S39
RATIO OR DIFFERENCE EXCEED THRESHOLD ?
N                    Y

S40
PUTTING ONLY ONE FINGER INTO ACTIVE STATE WITH THE REMAINING FINGER UNUSED

ALLOCATING UNUSED FINGER TIMING CANDIDATE TO THE UNUSED FINGER CIRCUIT — S41

END

FIG.8

FIG.9

235

CLOSE TIMING
PROTECTION PORTION

31 — RELATION CHECK PORTION

32 — PROTECTION COUNTER MONITORING PORTION

34 — PROTECTION COUNTER RENEWED PORTION

35 — FINGER ALLOCATION CHANGING PORTION

# FIG.10

FIG.11